Europäisches Patentamt

European Patent Office

Office européen des brevets

(11) Publication number: **0 134 598**
**B1**

(12) **EUROPEAN PATENT SPECIFICATION**

(45) Date of publication of patent specification: **20.04.88**

(21) Application number: **84200910.2**

(22) Date of filing: **25.06.84**

(51) Int. Cl.⁴: **B 65 G 15/02, B 65 G 15/60**

(54) **Belt conveyor for the transport along a curve.**

(30) Priority: **01.07.83 NL 8302361**

(43) Date of publication of application:
**20.03.85 Bulletin 85/12**

(45) Publication of the grant of the patent:
**20.04.88 Bulletin 88/16**

(84) Designated Contracting States:
**AT BE CH DE FR GB IT LI LU NL SE**

(56) References cited:
**AT-B- 355 983**
**CH-A- 494 690**
**US-A-3 994 390**

(73) Proprietor: **Weimar N.V.**
**P.O. Box 812**
**Willemstad Curaçao (NL)**

(72) Inventor: **ter Bals, Berend Jan**
**Schokkerlaan 49**
**NL-1503 JN Zaandam (NL)**

(74) Representative: **de Vries, Johannes Hendrik Fokke et al**
**Octrooibureau Los en Stigter B.V. P.O. Box 20052**
**NL-1000 HB Amsterdam (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a belt conveyor for the transport along a curve, with two end rollers over which a conveyor belt is led, the conveyor belt being provided with carrier means on at least one side edge, the outer portion of the conveyor belt carrying retaining means, which prevent an inwardly directed displacement of the conveyor belt, the retaining means being guided in a stationary mounted guide with two guide surfaces facing away from the conveyor belt, between which guide surfaces a passage slot is left clear, the retaining means at the same time being the carrier means.

Such belt conveyor is known from CH—A—494.690. This document discloses a belt conveyor for transporting goods around a curve, which comprises two conical end rollers, of which the upper one is driven by an electric motor. An endless conveyor belt is guided over the two conical end rollers and the outer edge portion of the conveyor belt carries a plurality of retaining means which engage with a helical portion of a stationary guide way. This guide way is located at the outer edge of the conveyor belt and prevents the conveyor belt from being inwardly displaced. Each retaining means consists of a lower and upper roller which roll on guide surfaces facing away from the conveyor belt. Between the guide surfaces a passage slot is left clear for the connection of the conveyor belt to the retaining means.

AT—A—355.983 discloses a belt conveyor comprising an endless conveyor belt having an upper and lower part. Near the outside edge of the conveyor belt a flexible rack is provided on the face of the conveyor belt opposite to the bearing surface thereof, the rack following the conveyor belt in its longitudinal direction. The belt conveyor comprises at least one stationary mounted driving element having a driven gear wheel which meshes both with the flexible rack under the upper part and with the flexible rack on the lower part of the conveyor belt when these belt parts are parallel to each other. The flexible rack engages guide discs rotatably supported near the outside of the conveyor belt and constituting a guide means locking the conveyor belt against a radial inwardly directed displacement.

It is an object of the present invention to provide a conveyor belt, which shows important advantages with respect to the known belt conveyors described hereinabove.

To this end the belt conveyor according to the invention is characterized in that the carrier means on at least one side edge of the conveyor belt cooperate with at least one stationary mounted driving element, comprising an endless drive means, such as an endless chain, rope, belt or the like, which is provided with carriers adapted to engage the carrier means on the conveyor belt.

In this way a great amount of freedom in the dimensions of the conveyor belt is obtained.

The (each) endless chain, rope, belt or the like may at least partly extend in a stationary mounted guide means and may carry guide rollers or the like, which cooperate with said guide means.

An embodiment of the belt conveyor according to the invention is characterized in that the retaining means at the same time accomplish a confinement in a direction perpendicular to the adjoining belt portions.

In this way an excellent guide of the outer side edge of the conveyor belt is obtained.

According to a simple embodiment of this belt conveyor the retaining means carry lateral projections, which are in contact with the edges of the passage slot.

The retaining means may comprise shafts, which are led through the conveyor belt, which shafts are perpendicular to the adjoining belt portions, while retaining rollers provided with a flange are rotatable on these shafts on either side of the belt, said retaining rollers being in contact with the guide surfaces and with the edges of the passage slot.

The invention will hereafter be elucidated with respect to the drawing, which shows some embodiments by way of example of the belt conveyor according to the invention.

Fig. 1 is a schematic top view of a portion of a belt conveyor according to the invention.

Fig. 2 is a cross-section through plane II—II in fig. 1 on a larger scale.

Fig. 3 is a cross-section according to plane III—III in fig. 1 on a larger scale.

Fig. 4 shows a part of the driving element according to fig. 1 more in detail and on a larger scale.

Fig. 5 is a schematic top view of a carrier of the driving element according to fig. 4, which is in engagement with a carrier means of the conveyor belt.

Fig. 6 is a cross-section, partly in side view, of a modified embodiment of the belt conveyor according to the invention.

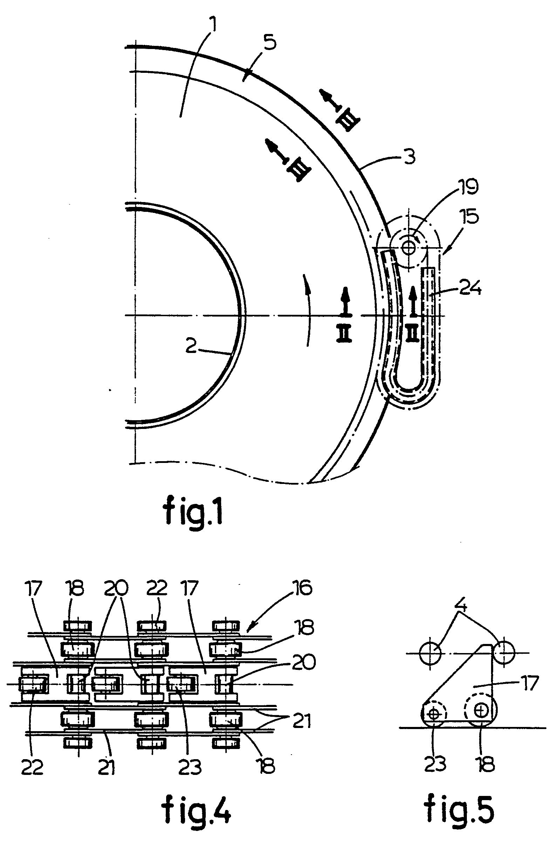

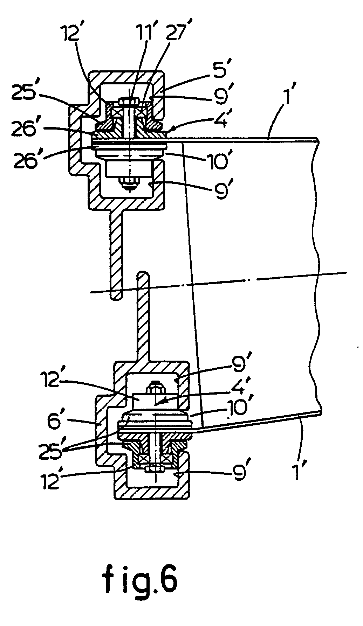

Figs. 1—5 show a first embodiment of a belt conveyor for the transport along a circular curve.

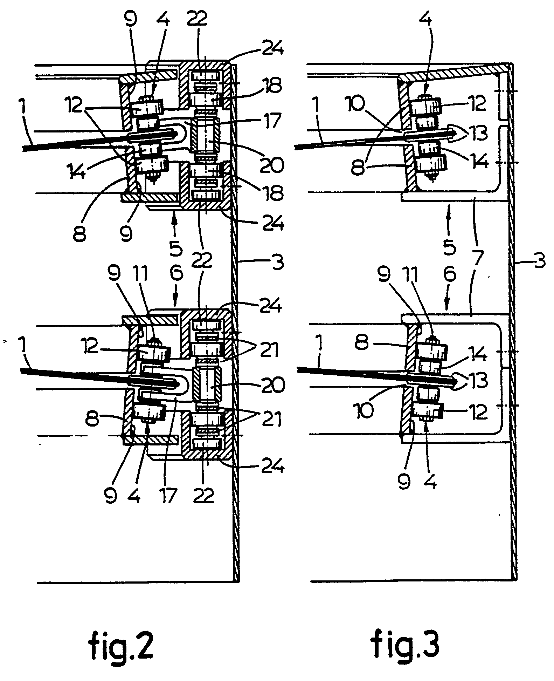

A belt conveyor of this kind may serve for the transport along a curve which lies in a plane, but in the embodiment shown this belt conveyor is provided with a helically shaped conveyor belt 1, so that the belt conveyor also has an upward or downward component of displacement. In figs. 2 and 3 this conveyor belt 1 is inclined in cross-section in the upper portion as well as in the lower portion, but as an alternative this conveyor belt may have a horizontal cross-section in the upper portion or in both portions.

The belt conveyor comprises a cylindrical inner plate 2 and a cylindrical outer plate 3 which is concentric with the inner plate, which plates together form the frame of the belt conveyor and are connected with each other by means of connecting strips (not shown). The cylindrical inner plate 2 and the cylindrical outer plate 3 carry bearings (not shown) for supporting end rollers (not shown), which for example are conically or cylindrically shaped.

The outer portion of the conveyor belt 1 carries retaining means 4, which prevent an inwardly directed displacement of the conveyor belt 1, because these retaining means are guided in stationary mounted guides 5 and 6 for the upper and the lower portion of the conveyor belt 1, these guides being supported by the cylindrical outer plate 3.

In the embodiment shown by way of example in figs. 1—5 these guides 5, 6 are built up of sections 7, which are connected to the cylindrical outer plate 3 by means of bolts or the like and which carry strips 8. The sides of these strips, which face away from the conveyor belt 1 form guide surfaces 9. The cooperating pairs of strips 8 leave a passage slot 10 clear, through which the conveyor belt 1 is led so that its outer portion lies within the guides 5, 6.

In the embodiment shown in figs. 1—5 the retaining means 4 consist of shafts 11, which are perpendicular to the relative belt portion, which shafts carry retaining rollers 12, which are displaced along the guide surfaces 9. Wear rings 13 are mounted on these shafts 11 above and below the outer portion of the conveyor belt 1, while distance rings 14 are confined between the wear rings 13 and the retaining rollers 12.

In the embodiment according to figs. 1—5 the retaining means 4 are at the same time carrier means, which cooperate with at least one stationary mounted driving element 15 for driving the conveyor belt 1.

In figs. 1—5 the driving element 15 comprises an endless driving chain 16, which is provided with carriers 17, which cooperate with the distance rings 14 of the retaining means 4. The endless driving chain 16 comprises chain rollers 18 above and below the carriers 17, which chain rollers come into engagement with sprocket wheels 19 driven by a motor, the chain rollers being rotatably mounted in pairs on an upstanding chain shaft 20. These chain shafts 20 each carry two strip shaped connecting links 21 on either side of each chain roller 18, while these chain shafts support the relative carrier 17 in the central area.

A guide roller 22 is mounted on each chain shaft 20 above the upper strip shaped links 21 and below the lower strip shaped links 21.

Each carrier 17 is constructed with a roller 23 in the way as shown in fig. 5. The endless driving chain 16 extends at least partly in a stationary mounted guide means 24, which guides and supports the carrier 17 in such a way that these carriers may forcibly engage the retaining means 4 and may attend to the driving of the conveyor belt 1.

Of course a variety of other embodiments of the driving elements 15 for the conveyor belt 1 is possible.

The driving elements 15 may be arranged at intervals along the upper portion and/or along the lower portion of the conveyor belt 1. In this way a large amount of freedom in the transverse dimension and in the longitudinal dimension of the conveyor belt 1 is obtained, while, if the conveyor belt 1 is helically shaped, as is shown in figs. 1—5, also the height dimension of the conveyor belt 1 may be very large.

Fig. 6 shows a slightly modified embodiment of the belt conveyor according to the invention for the transport along a curve.

In the manner as described hereinbefore this belt conveyor is provided with two end rollers (not shown), over which the conveyor belt 1' is led. The outer portion of the conveyor belt 1' carries retaining means 4', which prevent an inwardly directed displacement of the conveyor belt 1', because these retaining means are guided in stationary mounted guides 5', 6'. These guides 5', 6' comprise two guide surfaces 9' facing away from the conveyor belt 1', between which guide surfaces a passage slot 10' is left clear.

According to this modified embodiment the retaining means 4' at the same time accomplish a confinement in a direction perpendicular to the adjoining belt portions. In this way an excellent guide of the conveyor belt 1' is obtained.

In the embodiment according to fig. 6 the retaining means 4' comprise shafts 11', which are led through the conveyor belt 1', which shafts are perpendicular to the adjoining belt portions. Retaining rollers 12' with flanges 25' are rotatably mounted on these shafts on both sides of the conveyor belt 1', which retaining rollers are in engagement with the guide surfaces 9' and with the edges of the passage slot 10'.

Furthermore, a spacer ring 26' is mounted on the shafts 11' on both sides of the conveyor belt 1', which spacer ring 26' axially confines the relative retaining roller 12', whereby a bearing 27', for example a ball bearing or a slide bearing, is confined between each spacer ring 26' and the cooperating retaining roller 12'.

Of course it is not absolutely necessary to use such a bearing, as the retaining rollers 12' may also be manufactured from such a material, for example nylon, that these retaining rollers may be rotatably mounted themselves on the cooperating shafts 11'.

In the embodiment according to fig. 6 the retaining means 4' again function as carrier means as well, and cooperate with a driving element.

The invention is not restricted to the embodiments shown in the drawing by way of example, which may be varied in several ways within the scope of the appended claims.

**Claims**

1. Belt conveyor for the transport along a curve, with two end rollers over which a conveyor belt (1) is led, the conveyor belt being provided with carrier means on at least one side edge, the outer portion of the conveyor belt carrying retaining means (4), which prevent an inwardly directed displacement of the conveyor belt (1), the retaining means (4) being guided in a stationary mounted guide (5, 6) with two guide surfaces (9)

facing away from the conveyor belt (1), between which guide surfaces (9) a passage slot (10) is left clear, the retaining means (4) at the same time being the carrier means, characterized in that the carrier means on at least one side edge of the conveyor belt (1) cooperate with at least one stationary mounted driving element (15), comprising an endless drive means, such as an endless chain (16), rope, belt or the like, which is provided with carriers (17) adapted to engage the carrier means (4) on the conveyor belt.

2. Belt conveyor according to claim 1, characterized in that the (each) endless chain (16), rope, belt or the like at least partly extends in a stationary mounted guide means (24) and carries guide rollers (22) or the like, which cooperate with said guide means (24).

3. Belt conveyor according to any one of the preceding claims, characterized in that the retaining means (4') at the same time accomplish a confinement in a direction perpendicular to the adjoining belt portions.

4. Belt conveyor according to claim 3, characterized in that the retaining means (4') carry lateral projections, which are in contact with the edges of the passage slot (10').

5. Belt conveyor according to claim 4, characterized in that the retaining means (4') comprise shafts (11'), which are led through the conveyor belt (1'), which shafts are perpendicular to the adjoining belt portions, while retaining rollers (12') provided with a flange (25') are rotatable on these shafts (11') on either side of the belt (1'), said retaining rollers (12') being in contact with the guide surfaces (9') and with the edges of the passage slot (10')'.

6. Belt conveyor according to claim 5, characterized in that a spacer ring (26') is mounted on the shafts (11') on either side of the conveyor belt (1'), while a bearing (27') is confined between each spacer ring (26') and the cooperating retaining roller (12').

**Patentansprüche**

1. Bandförderer für den Transport entlang einer Kurve, mit zwei Endrollen, über die ein Förderband (1) geführt ist, wobei das Förderband an wenigstens einem Seitenrand mit Trageinrichtungen versehen ist, der äußere Bereich des Förderbandes Rückhalter (4) trägt, die eine nach innen gerichtete Verlagerung des Förderbandes (1) verhindern, die Rückhalter (4) in einer feststehend angebrachten Führung (5, 6) geführt sind, die zwei vom Förderband (1) abweisende Führungsflächen (9) aufweist, zwischen welchen Führungsflächen (9) ein Durchtrittsschlitz (10) freigelassen ist, und die Rückhalter (4) zugleich die Trageinrichtungen bilden, dadurch gekennzeichnet, daß die Trageinrichtungen an wenigstens einem Längsrand des Förderbandes (1) mit wenigstens einem stationär montierten Antriebselement (15) zusammenwirken, das eine endlose Antriebseinrichtung, wie eine endlose Kette (16), ein endloses Seil, Band od. dgl. aufweist, die bzw. das mit für den Eingriff mit den Trageinrichtungen (4) am Förderband bestimmten Abstützungen (17) versehen ist.

2. Bandförderer nach Anspruch 1, dadurch gekennzeichnet, daß die (jede) endlose Kette (16) bzw. das (jedes) Seil, Band od. dgl. wenigstens zum Teil in einer feststehend angebrachten Führung (24) verläuft und Führungsrollen (22) od. dgl. trägt, die mit der Führung (24) zusammenwirken.

3. Bandförderer nach einem der vorhergehenden Ansprüche, dadurch gekennzeichnet, daß die Rückhalter (4') zugleich eine Begrenzung in einer normal zu den angrenzenden Bandbereichen verlaufenden Richtung bewirken.

4. Bandförderer nach Anspruch 3, dadurch gekennzeichnet, daß die Rückhalter (4') seitliche Vorsprünge tragen, die in Berührung mit den Rändern des Durchtrittsschlitzes (10') stehen.

5. Bandförderer nach Anspruch 4, dadurch gekennzeichnet, daß die Rückhalter (4') Wellen (11') aufweisen, die durch das Förderband (1') geführt sind, welche Wellen normal zu den anschließenden Randbereichen verlaufen, wobei mit einem Flansch (25') versehene Rückhalterollen (12') auf diesen Wellen (11') an beiden Seiten des Bandes (1') drehbar angebracht sind, welche Rückhalterollen (12') in Berührung mit den Führungsflächen (9') und mit den Rändern des Durchtrittsschlitzes (10') stehen.

6. Bandförderer nach Anspruch 5, dadurch gekennzeichnet, daß an beiden Seiten des Förderbandes (1') auf den Wellen (11') je ein Distanzring (26') angebracht und zwischen jedem Distanzring (26') und der mit ihm zusammenwirkenden Rückhalterolle (12') ein Lager (27') eingeschlossen ist.

**Revendications**

1. Transporteur à bande pour le transport le long d'un virage, comportant deux rouleaux extrêmes sur lesquels est menée une bande transporteuse (1), la bande transporteuse étant munie de moyens porteurs sur au moins un bord latéral, la partie extérieure de la bande transporteuse portant des moyens (4) de retenue qui empêchent un déplacement de la bande transporteuse (1) en direction de l'intérieur, les moyens (4) de retenue étant guidés dans un guide (5, 6) monté fixement, présentant deux surfaces (9) de guidage tournées à l'écart de la bande transporteuse (1), surfaces (9) de guidage entre lesquelles une fente (10) de passage est laissée dégagée, les moyens (4) de retenue étant en même temps les moyens porteurs, caractérisé en ce que les moyens porteurs sur au moins un bord latéral de la bande transporteuse (1) coopèrent avec au moins un élément menant (15) monté fixement, comprenant un moyen d'entraînement sans fin, tel qu'une chaîne (16), une corde, une courroie ou un élément analogue sans fin, qui est muni de chariots (17) conçus pour s'enclencher avec les moyens porteurs (4) situés sur la bande transporteuse.

2. Transporteur à bande selon la revendication 1, caractérisé en ce que la (chaque) chaîne (16), corde, courroie ou pièce analogue sans fin s'étend au moins partiellement dans un moyen (24) de guidage monté fixement et porte des galets (22) de guidage ou analogues qui coopèrent avec ledit moyen de guidage (24).

3. Transporteur à bande selon l'une quelconque des revendications précédentes, caractérisé en ce que les moyens de retenue (4') réalisent dans le même temps un confinement dans une direction perpendiculaire aux tronçons de bande contigus.

4. Transporteur à bande selon la revendication 3, caractérisé en ce que les moyens (4') de retenue portent des saillies latérales qui sont en contact avec les bords de la fente de pasage (10').

5. Transporteur à bande selon la revendication 4, caractérisé en ce que les moyens (4') de retenue comprennent des axes (11') qui sont menés à travers la bande transporteuse (1'), lesquels axes sont perpendiculaires aux tronçons de bande contigus, tandis que des galets (12') de retenue, munis d'un mentonnet (25'), peuvent tourner sur ces axes (11') de chaque côté de la bande (1'), lesdits galets (12') de retenue étant en contact avec les surfaces (9') de guidage avec les bords de la fente (10') de passage.

6. Transporteur à bande selon la revendication 5, caractérisé en ce qu'une entretoise annulaire (26') est montée sur les axes (11') de chaque côté de la bande transporteuse (1'), tandis qu'un palier (27') est confiné entre chaque entretoise annulaire (26') et le galet de retenue coopérant (12').

fig.1

fig.4

fig.5

fig.2

fig.3

fig.6